# EUROPEAN PATENT APPLICATION

(11) **EP 3 112 820 A1**
(43) Date of publication of application: **04.01.2017**
(21) Application number: 15175269.8
(22) Date of filing: 03.07.2015
(51) Int. Cl.: G01F 1/66

(54) **FLUID CONSUMPTION METER WITH NOISE SENSOR**

(71) Applicant: KAMSTRUP A/S, 8660 Skanderborg (DK)
(72) Inventor: Sørensen, Jens Lykke, 8330 Beder (DK); Laursen, Peter Schmidt, DK-8660 Skanderborg (DK); Nielsen, Søren Tønnes, DK-8355 Solbjerg (DK)
(74) Representative: Plougmann Vingtoft a/s

(57) **Abstract**

A consumption meter, e.g. a water or heat meter, for measuring a flow rate of a fluid supplied in a flow tube. First and second ultrasonic transducers are arranged at the flow tube for transmitting and receiving ultrasonic signals transmitted through the fluid and operated by a first control circuit for generating a signal indicative of the flow rate of the fluid. A second control circuit operates a sensor arranged at the flow tube for detection of vibro-acoustic signals of the flow tube, and being arranged to generate a signal indicative of noise level of the flow tube accordingly. This sensor may comprise a separate transducer, or the sensor may be constituted by one or both of the first and second ultrasonic transducers. The consumption meter may communicate data representive of noise level via a communication module along with data consumed amount of water, heat etc. Such consumer noise level measurement at the consumer site allows collection of noise level data to assist in locating fluid leakage in a fluid supply pipe system.

## Description

### FIELD OF THE INVENTION

The present invention relates to the field of devices with a sensor for measurement of an acoustic noise in a fluid. More specifically, the invention relates to the field of devices with a noise sensor for monitoring noise in a utility piping network. Specifically, the invention provides a noise sensor integrated with an ultrasonic flow meter, e.g. an ultrasonic consumption meter, or utility meter, comprising an ultrasonic flow meter, for measuring consumption data of a supplied utility, e.g. water, heat, or cooling.

### BACKGROUND OF THE INVENTION

In distribution networks for potable water, hot water for district heating and/or cold water for district cooling, it is of importance to quickly detect anomalies in day-to-day performance. For instance, a busted pipe in a water distribution network can easily cause the loss of hundreds or even thousands of cubic meters of clean, potable water, resulting in a financial loss to the distributor as well as an environmental loss to the whole community. Another example could be a valve in a district heating distribution network, which does not open or close fully as intended. As a result, pressure pumps may have to be operated at a higher revolution rate, causing increased energy consumption by the distributor and a reduced efficiency of heating at the consumer.

Hence, it is desirable to the distributor, and eventually to the consumer, to aid the distributor in detecting and locating such anomalies shortly after, or even before they fully develop.

In the case of pipe leaks or bursts various methods for location exist. One of these involves a number of hydrophones installed on hydrants or in wells. The signals from the hydrophones are then correlated in order to triangulate the leak position. Alternatively, tracers can be introduced into the fluid. Such a tracer could be gas or a fast decaying radioactive substance. Finally, ground radar provides a means to detect the water accumulation as a result of a (major) leak. Common to these methods is that they typically require the involvement of a sub-contractor to provide the expertise of handling the sophisticated equipment needed as well as interpreting the data generated.

### SUMMARY OF THE INVENTION

It would be advantageous to provide a simple and low cost device to allow monitoring for leaks in a utility network, hereby allowing utility companies to distribute such devices at several positions in the utility network.

In a first aspect, the invention provides a consumption meter arranged to measure a flow rate of a fluid supplied in a flow tube, the consumption meter comprising:
- a flow tube with a through-going opening for passage of a fluid between an inlet and an outlet,
- first and second ultrasonic transducers, such as piezoelectric transducers, arranged at the flow tube for transmitting and receiving ultrasonic signals transmitted through the fluid,
- a first control circuit arranged for operating the first and second ultrasonic transducers, and being arranged to generate a signal indicative of the flow rate of the fluid accordingly, and
- a second control circuit arranged for operating a sensor arranged at the flow tube for detection of vibro-acoustic signals of the flow tube, and being arranged to generate a signal indicative of noise level of the flow tube accordingly.

The term 'vibro-acoustic signals of the flow tube' should be understood as covering vibro-acoustic signals of the fluid in the flow tube and vibro-acoustic signals of the flow tube *per se.*

By 'first control circuit' is understood the necessary electronic circuits adapted to control the function of the first and second ultrasonic transducers, so as to allow measurement of fluid flow according to known principles of ultrasonic transit time. Especially, the first control circuit may be capable of generating as output a pulse train indicative of the measured flow rate.

The invention is advantageous in that an ultrasonic consumption meter capable of measuring flow rate, e.g. as known in existing water or a heat meters, is used also to measure a noise level of the flow tube (i.e. vibro-acoustic signals below 20 kHz, i.e. below the ultrasonic frequency range). The invention is based on the insight that there exists a synergistic effect in measuring noise level at the position of single consumer sites. Even though the noise level can be expected to vary significantly over time at each side, and thus of limited value on its own, valuable information can be gained, if all or most consumption meters in a municipal distribution network deliver noise level data to the distributor. Hereby, a greater picture can be drawn up by the power of plurality, and anomalies in the distribution network, e.g. leaks in the piping system, can be uncovered. If in addition geographical data are available of the location of the individual consumption meters, the location of an anomaly can be estimated. The uncertainty of this location is likely to be limited by the density of consumption meters and the accuracy of their respective positions.

Furthermore, distribution networks with so-called automatic meter reading (AMR) systems are common, in which consumption data are relayed from the consumption meters at the consumer site to the distributor with regular time intervals, spanning from hourly to yearly. Typically, data are transmitted somewhere between 1 and 24 times every day. The communication typically takes place via a wireless network which is operated by either the distributor or a subcontractor, and hence is dedicated to the task. The capacity of such a communication network is more than sufficient to carry additional information besides the consumption data. Thus, such additional information could be data representing the noise level in the fluid distribution pipes from each consumption meter. Hereby, the distributor can store and/or process such noise level data in a dedicated processing system, e.g. for monitoring for leaks or other anomalities in the piping system. The sensitivity of such monitoring system may be improved even more by combining noise level data with other data that can also be obtained from each consumption meter, e.g. flow rate, pressure, and temperature measured by each consumption meter. Such data may especially be useful in combination with a hydraulic model for the distribution network pipe system.

Studies have shown that vibro-acoustic noise due to leaks in pipes is dominant in the frequency range from 100s to 1000s of Hz, depending on the leak size, pipe material, flow rate and operating pressure. Ultrasonic flow meters are typically operated in the (few) MHz range, thus the relevant noise level frequency range is significantly different form the frequency of signals used in ultrasonic flow rate measurements. The vibro-acoustic signals can be measured in a variety of different ways with different sensors, spanning from a simple moving coil microphone via capacitive sensors or sensor arrays to piezoelectric sensors. An accelerometer arranged on the flow tube may be used as sensor, i.e. without direct fluid contact, or hydrophones can alternatively or additionally be used, i.e. sensors in contact with the fluid. Since a consumption meter based on ultrasonic measurement of flow already comprises ultrasonic, such as piezoelectric transducers, in an embodiment, the same transducer(s) involved in flow rate measurements can be used as sensor to capture vibro-acoustic signals in the flow tube. However, it is to be understood that the consumption meter may also comprise a dedicated sensor for vibro-acoustic signals, e.g. a third ultrasonic transducer, or a dedicated sensor based on another sensor technology. Due to the non-overlapping frequency ranges, noise measurement and ultrasonic flow measurements may be performed simultaneously. However, it may also be preferred to perform these measurements in non-overlapping periods.

Modern consumption flow meters employ one or more microcontrollers to perform the flow measurement and to calculate data representing a consumption amount. Thus, it is to be understood that the first and second control circuits may be implemented in practice at least partly as software executed on one single processor, or on two or more separate processors. The computing power of a modern microcontroller is adequate to perform the data analysis of the signal recorded by the vibro-acoustic sensor, e.g. to perform a statistical analysis of noise levels sensed over a period of time, thus reducing the required data to be transmitted rather than transmitting unprocessed large amount of data with time sequences of sensed noise.

Data processing of the output from the sensor may specifically be a simple root-mean-square (RMS) calculation to provide a value representing a measure of overall noise level (e.g. in a limited frequency band, such as 100-10,000 Hz). More sophisticated analysis could be frequency filtering into certain frequency bands, followed by an RMS calculation, to provide a range of noise figures associated with different frequency bands. Finally, a full Fast Fourier Transform (FFT) could be performed to provide the full spectrum of acoustic vibrations, involving noise power density as well the associated phase information. The latter level of analysis may be preferred, in order to perform a cross correlation calculation with the purpose of triangulating the location of the noise source. However, for many practical purposes the information coming from the simpler noise figure calculation will be sufficient to pinpoint a general area, where the noise source is located.

The data processing on-board the consumption meter may comprise detecting if a measure of average or peak noise level exceeds a predetermined threshold value. In such case, the consumption meter may be arranged to transmit a special warning signal of the like. This may facilitate processing at the distributor side, since leakages or other anomalities can be easily monitored by monitoring for such warnings. Still further, the consumption meter may utilize the measured flow rate, and further data available, such as fluid temperature, pressure etc., to be able to correlate the noise level measurements with other on-board measured data so as to be able to detect anomalities, and e.g. transmit a warning signal accordingly.

In the following, preferred features and embodiments will be described.

The second control circuit may be arranged for operating the first ultrasonic transducer as the sensor for detection of vibro-acoustic signals of the flow tube. Especially, the second control circuit may be arranged for operating both of the first and second ultrasonic transducers as sensors for detection of vibro-acoustic signals of the flow tube. Hereby, said sensor need not to be a separate component, but either one or both of the ultrasonic transducers serving as flow rate sensors can as well serve as noise level sensors.

Said sensor for detection of vibro-acoustic signals may comprise a vibro-acoustic transducer separate from the first and second ultrasonic transducers, e.g. a third ultrasonic transducer, or a transducer based on another technology. In this way, it is possible to select a transducer with improved sensitivity to the desired vibro-acoustic frequency range of interest, e.g. fluid leakage noise. As examples, an inductive or a capacitive based transducer may be used for the sensor.

In some embodiments, both the first and second ultrasonic transducer as well as a third separate transducer, e.g. further tranducers, may be connected to the second control circuit and serve as sensors for vibro-acoustic signals of the flow tube.

In embodiments comprising a third ultrasonic transducer to be used as said sensor, the third ultrasonic transducer may comprise a piezoelectric element with a first surface facing the flow tube, and wherein a second surface opposite the first surface of the piezoelectric element is supported by a rigid backing of an acoustically dampening material, e.g. a dampening material comprising rubber. In this way, it is possible to provide an improved sensitivity to noise in a desired frequency range. Especially, said first surface may contact the fluid in the flow tube via an acoustic window, or membrane, having a thickness less than 1/10 of the wavelength of the vibro-acoustic signals. Such an acoustic window or membrane may be integrated with the flow tube wall.

In case said sensor for detection of vibro-acoustic signals comprises a separate transducer, this separate transducer may be arranged along the flow tube at a position between the first and second ultrasonic transducers.

The second control circuit preferably comprises a filter arranged to band-pass filter a signal received from the sensor for detection of vibro-acoustic signals. E.g. so as to band-pass the signal received from the sensor for detection of vibro-acoustic signals in a frequency range of 50 Hz to 40 kHz, such as in a frequency range of 200 Hz to 20 kHz.

In case the first and second ultrasonic transducers serve as sensors for detection of vibro-acoustic signals, the first and the second control circuits may be arranged in parallel, and wherein their respective operations are selected by a switching means, e.g. to control the first and second control circuits so as to provide a non-overlapping function as sensors for detection of vibro-acoustic signals and flow rate measurement.

The second control circuit may be arranged to process an output from the sensor for detection of vibro-acoustic signals over a period of time, and to accordingly calculate at least one single value indicative of average noise level. The second control circuit may e.g. be arranged to accordingly calculate a plurality of values indicative of respective spectral components of average noise level, e.g. corresponding to selected 1/1 octave or 1/3 octave levels etc. The second control circuit may alternatively or additionally be arranged to calculate a peak value indicative of a peak noise level for said period of time. The second control circuit may alternatively or additionally be arranged to accordingly calculate a plurality of different values indicative of noise level for said period of time. By measuring over a period of time and processing the measured signals, it is possible to reduce the amount of data to be communicated from the consumption meter with respect to sensed vibro-acoustic signals of the flow tube which may be considered as noise indicative of leakages or other anomalities. Still further, the second control circuit may alternatively or additionally be arranged to accordingly calculate a measure of noise level, and to compare said measure of noise level to a threshold value, and to generate a leakage warning signal in case said threshold value is exceeded. Especially, in such case, the consumption meter may defer sending any data except in case a leakage warning signal is generated.

The consumption meter preferably comprises a communication module arranged for communicating said signal indicative of the flow rate of the fluid, and for communicating data representing at least one value indicative of the noise level of the flow tube. The communication module may be further arranged to communicate data representing a measured flow rate of fluid in the flow tube or data representing a consumed quantity, such as being arranged to transmit data packets with both a value indicative of the noise level of the flow tube, and a value representing a consumed quantity.

The consumption meter may further comprise sensors for measurements of the pressure and/or the temperature of the fluid. Further, the consumption meter is capable of communicating data representing such pressure and/or temperature of the fluid via a communication module.

The consumption meter may be a water meter, a gas meter, a heat meter, or a cooling meter. Preferably, the consumption meter is arranged for measuring consumption data of a supplied utility used as a basis for billing in which the flow rate measurement forms a part. The consumption meter may be used in connection with district heating, district cooling and/or distributed water supply. The consumption meter may be a legal meter, i.e. a meter which is subdued to regulatory demands. Such regulatory demands may include demands to the precision of the measurements.

The second control circuit may comprise an operational amplifier with a closed loop feedback, such as with the closed loop feedback comprising a capacitor in parallel with a resistor, so as to provide a charge sensitive amplifier.

In the second aspect, the invention provides a method of measuring a flow rate of a fluid supplied in a flow tube by means of a consumption meter according to any of the preceding claims, the method comprising:
- operating the first and second ultrasonic transducers by means of the first control circuit to transmit and receive ultrasonic signals through the fluid in the flow tube,
- generating by means of the first control circuit a signal indicative of flow rate of the fluid,
- operating the sensor for detection of vibro-acoustic signals of the flow tube by means of the second control circuit, and
- generating by means of the second control circuit a signal indicative of noise level of the flow tube.

Especially, the first control circuit may operate the first and second ultrasonic transducers for measuring flow rate of the fluid during a first operation time period, and the second control circuit may operate the sensor for detection of vibro-acoustic signals of the flow tube during a second operation time period, wherein the first and second operation time periods are non-overlapping.

In a third aspect, the invention provides a system comprising a plurality of consumption meters according to the first aspect, wherein the plurality of consumption meters are arranged spatially distributed in a utility network, wherein each of the plurality of consumption meters further comprises communication means arranged to transmit data representing a noise level of the flow tube in response to the signal indicative of noise level of the flow tube, wherein the system comprises a main collector arranged to receive said data representing the noise level of the flow tube from the plurality of consumption meters.

The system may comprise a data processor arranged to monitor said data representing the noise level from the consumption meters in the utility network, and to determine a measure of position of a fluid leakage in the utility network in response to said data representing the noise level from the consumption meters and information regarding individual positions of the consumption meters in the utility network. Especially, the data processor may execute a triangulation algorithm to determine said measure of position of the fluid leakage.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates a sketch of a consumption meter embodiment with a dedicated noise sensor transducer,
Fig. 2 illustrates a sketch of a consumption meter embodiment where one of the ultrasonic transducers involved in flow rate measurements is used to pick up noise,
Fig. 3 illustrates an example of a system embodiment where a leak in a utility network can be detected from an increase in noise level detected by a group of consumption meters,
Fig. 4 illustrates for the system of Fig. 3 an example of a leak at another position in the utility network, and
Fig. 5 illustrates steps of a method embodiment.

### DESCRIPTION OF EMBODIMENTS

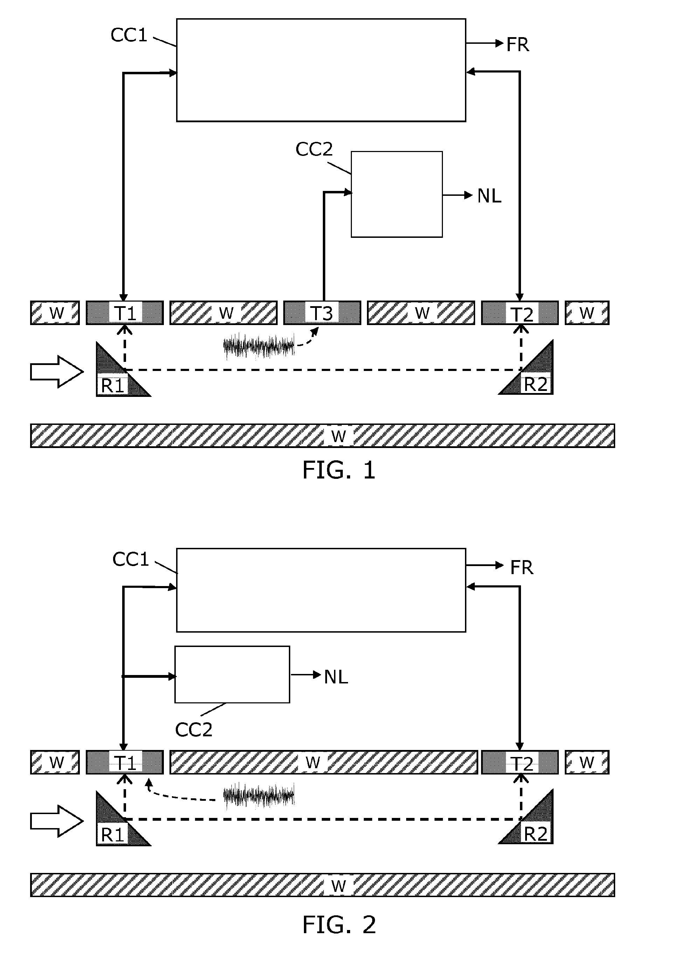

Fig 1 illustrates a sketch of a consumption meter embodiment where two piezoelectric ultrasonic transducers T1, T2 are arranged in the wall W of a flow tube in which fluid flows in the direction indicated by the large arrow to the left. The two transducers T1, T2 are operated by a first control circuit CC1 to transmit and receive ultrasonic signals via the transducers T1, T2, so as to be able to generate a flow rate FR signal indicative of the fluid flow rate based on known ultrasonic transit time measurement techniques. In the setup sketched, reflectors R1, R2 serve to direct the ultrasonic signals (dashed arrows) along the fluid flow in the flow tube.

In this embodiment, the sensor for measuring vibro-acoustic signals in the flow tube comprises a third separate transducer T3 located in the flow tube wall between the first and second transducers T1, T2. The noise curve indicates noise in the fluid that is captured by this separate transducer T3. The output from the transducer T3 is applied to a second control circuit CC2 which processes and outputs a measure of noise level accordingly. Especially, the third transducer T3 may be a piezoelectric transducer, e.g. similar to the first and second piezoelectric transducers T1, T2. Especially, the third piezoelectric transducer T3 may comprise a piezoelectric element, e.g. disc-shaped, with a first surface facing the flow tube, and wherein a second surface opposite the first surface of the piezoelectric element is supported by a rigid backing of an acoustically dampening material, such as a dampening material comprising rubber.

The consumption meter preferably comprises a communication module (not shown) arranged to communicate data indicate of the noise level NL in addition to consumption data based on the measured flow rate FR. In some embodiments, the consumption meter may correlate the measured flow rate FR and the noise level NL (and possibly other measured values) in order to be able to detect any anomaly which may then be communicated accordingly.

Fig. 2 illustrates a sketch of a variant of the embodiment of Fig. 1 where the first piezoelectric transducer T1 involved in the ultrasonic flow rate measurement is used as sensor for the vibro-acoustic signals in the flow tube. Thus, in this embodiment, both the first control circuit CC1 and the second control circuit CC2 are connected to the first transducer T1. The first and second control circuits CC1, CC2 may be operated simultaneously, or it may be preferred that they are controlled so that flow rate FR and noise level NL are measured at non-overlapping operating time periods. However, due to the spectral difference in the vibro-acoustic signals to be picked up for detecting leakage or other anomalities and the ultrasonic signal involved in flow rate measurements (up to 20 kHz versus a few MHz), the second control circuit CC2 may be arranged to spectrally filter the output from the first transducer T1. This can allow pick up of vibro-acoustic signals simultaneously with the first transducer T1 taking part in flow rate measurements controlled by the first control circuit CC1.

Compared to the embodiment of Fig. 1, the embodiment of Fig. 2 save one component, since the first transducer T1 has two functions. However, in the embodiment of Fig. 1 it may be possible to provide a more dedicated transducer T3 which is more sensitive to vibro-acoustic signals in the frequency range relevant for detecting anomalities.

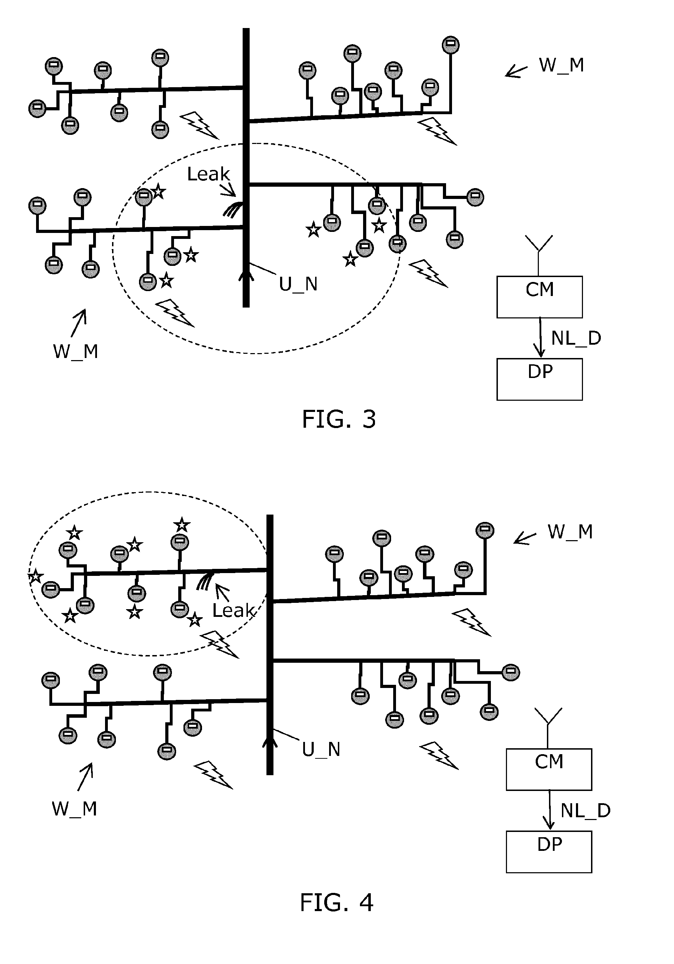

Fig. 3 illustrates a system embodiment, where a plurality of water meters W_M are mounted spatially distributed to measure water consumed by respective consumers connected to a water utility network U_N, which all comprise a control circuit arranged to operate a sensor for detection of vibro-acoustic signals of the flow tube, such as already described in the foregoing. The water meters W_M have all communication means in the form of radio modules capable of transmitting data representing a noise level of the flow tube in response to the signal indicative of noise level of the flow tube, e.g. split up in a limited number of frequency bands. Further, the radio modules are capable of transmitting data representing a consumed amount of water from the utility network U_N. Along with said data, the individual water meter W_M preferably transmit a unique identification code, so as to allow billing of the individual consumers in accordance with the consumed amount of water.

A main collector, e.g. located at the utility provider, comprises a communication module CM arranged to receive said data representing the noise level of the flow tube from the plurality of consumption meters, and data representing a consumed amount of the utility (here water), preferably along with a unique identification code to identify the individual consumption meter which has transmitted the data. The noise level data NL_D are provided to a data processor DP, e.g. a server, arranged to monitor said data NL_D representing the noise level from the consumption meters in the utility network, and to determine a measure of fluid leakage in the utility network accordingly. In Fig. 3 a leak is indicated at a specific location on the pipe system of the utility network U_N. Stars are used to indicate consumption meters where higher than usual noise levels are sensed. The data processor may execute a leakage monitoring algorithm that monitors the noise level data NL_D so as to allow early detection of leaks etc. E.g. by comparing observed noise level data NL_D with normally observed noise level data NL_D from the same consumption meters, e.g. in specific frequency bands, it will be possible to detect increased noise from a leak by consumption meters located near the leak, e.g. the ones indicated in Fig. 3 with stars. This allows the utility provider to locate a pipe damage and take action at an early stage after a leakage has occurred.

Based on data representing the noise level from the consumption meters, the data processor DP may be arranged to determine a position of a fluid leakage in the utility network U_N in response to said noise level data NL_D and information regarding individual positions of the consumption meters in the utility network. Especially, identification codes allow the data processor to identify physical positions of the consumption meters, and by means of applying a triangulation algorithm to the noise level data NL_D and the known positions of their origins, the position of a possible leakage may be identified.

Fig. 4 illustrates the same system as in Fig. 3, but for a different leak position in the pipe system. Again, stars indicate consumption meter where an increase in noise level is sensed, i.e. consumption meters located in the pipe system near the leak.

It is to be understood that in such systems, the noise level data NL_D transmitted by the consumption meter may have different complexity, depending on the amount of processing power in the consumption meters. E.g. the processing power may allow for a calculation of at least one statistical parameter which can be transmitted. E.g. a pre-processing in the consumption meter may allow the individual consumption meters themselves to monitor and for unusual noise, e.g. by comparing with registered noise levels over a long period of time. In such cases, not only noise level data but also an alarm signal may be transmitted from the consumption meter in case a predetermined noise level parameter exceeds a predetermined threshold, e.g. a threshold calculated by the individual consumption meter in response to noise levels registered over a long period of time.

It is to be understood that the noise level data NL_D may comprise average noise level data, e.g. one overall value, or split up into frequency bands, e.g. 1/1 octave bands. The noise level data NL_D may further comprise other parameters, such as peak values and/or a level exceeded in N percent of the time, or still other values determined in response to sensed vibro-acoustic signals. The noise level data NL_D may be transmitted at regular time intervals, e.g. along with data representing a consumed amount of the utility, and/or the noise level data NL_D may be requested from the main collector. Especially, it may be preferred to monitor noise level data NL_D obtained at specific time intervals, e.g. during night time, where only few noise disturbing events on the utility network U_N can be expected.

Further, in addition to the noise level data NL_D the data processor may be arranged to receive further additional measured data from the plurality of consumption meters, and to take into account such additional data in determining the measure of fluid leakage in the utility network accordingly. Such additional data may comprise one or more of: data representing a flow rate, data representing a pressure, data representing a temperature, and of course the data representing the consumed amount of the utility. As an example, an increased sensitivity to leakages may be obtained, if the data processor is arranged to correlate flow rate data and/or consumed amount of the utility with the noise level data NL_D, thereby monitoring for locations with an increase in noise level as well as an increase in a consumed amount of the utility and/or measured flow rate. Even more data can be used, such as a decrease in pressure, which may further serve as an indicator of a leakage.

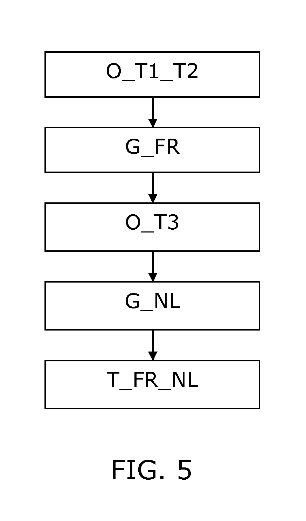

Fig. 5 shows an embodiment of a method of measuring a flow rate of a fluid supplied in a flow tube by means of a consumption meter. The method comprises operating first and second ultrasonic transducers O_T1_T2 by means of a first control circuit to transmit and receive ultrasonic signals through fluid flowing in a flow tube. Next, generating G_FR by means of the first control circuit a signal indicative of flow rate of the fluid. Next step is operating O_T3 a sensor for detection of vibro-acoustic signals of the flow tube by means of a second control circuit. In response, generating G_NL by means of the second control circuit a signal indicative of noise level of the flow tube, and finally transmitting T_FR_NL by means of a communication module in the consumption meter data indicative of the flow rate and data indicative of the noise level of the flow tube. Especially, the first control circuit may operate the first and second ultrasonic transducers during a first operation time period, and wherein the second control circuit operates the sensor for detection of vibro-acoustic signals of the flow tube during a second operation time period. The first and second operation time periods may be non-overlapping.

To sum up, the invention provides a consumption meter, e.g. a water or heat meter, for measuring a flow rate of a fluid supplied in a flow tube. First and second ultrasonic transducers are arranged at the flow tube for transmitting and receiving ultrasonic signals transmitted through the fluid and operated by a first control circuit for generating a signal indicative of the flow rate of the fluid. A second control circuit operates a sensor arranged at the flow tube for detection of vibro-acoustic signals of the flow tube, and being arranged to generate a signal indicative of noise level of the flow tube accordingly. This sensor may comprise a separate transducer, or the sensor may be constituted by one or both of the first and second ultrasonic transducers. The consumption meter may communicate data representive of the noise level via a communication module along with data consumed amount of water, heat etc. Such consumer noise level measurement at the consumer site allows collection of noise level data to assist in locating fluid leakage in a fluid supply pipe system.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. A consumption meter arranged to measure a flow rate of a fluid supplied in a flow tube, the consumption meter comprising:
- a flow tube with a through-going opening for passage of a fluid between an inlet and an outlet,
- first and second ultrasonic transducers arranged at the flow tube for transmitting and receiving ultrasonic signals transmitted through the fluid,
- a first control circuit arranged for operating the first and second ultrasonic transducers, and being arranged to generate a signal indicative of the flow rate of the fluid accordingly, and
- a second control circuit arranged for operating a sensor arranged at the flow tube for detection of vibro-acoustic signals of the flow tube, and being arranged to generate a signal indicative of noise level of the flow tube accordingly.

2. Consumption meter according to claim 1, wherein the second control circuit is arranged for operating the first ultrasonic transducer as the sensor for detection of vibro-acoustic signals of the flow tube, such as the second control circuit being arranged for operating both of the first and second ultrasonic transducers as sensors for detection of vibro-acoustic signals of the flow tube.

3. Consumption meter according to any of the preceding claims, wherein the sensor for detection of vibro-acoustic signals comprises a third ultrasonic transducer.

4. Consumption meter according to claim 3, wherein the third ultrasonic transducer comprises a piezoelectric element with a first surface facing the flow tube, and wherein a second surface opposite the first surface of the piezoelectric element is supported by a rigid backing of an acoustically dampening material.

5. Consumption meter according to claim 4, wherein said first surface contacts the fluid in the flow tube via an acoustic window having a thickness less than 1/10 of the wavelength of the vibro-acoustic signals.

6. Consumption meter according to any of the preceding claims, wherein the second control circuit is arranged to process an output from the sensor for detection of vibro-acoustic signals over a period of time, and to accordingly calculate at least one value indicative of average noise level.

7. Consumption meter according to any of the preceding claims, wherein the second control circuit is arranged to process an output from the sensor for detection of vibro-acoustic signals over a period of time, and to accordingly calculate a measure of noise level, and to compare said measure of noise level to a threshold value, and to generate a leakage warning signal in case said threshold value is exceeded.

8. Consumption meter according to any of the preceding claims, comprising a communication module arranged for communicating said signal indicative of the flow rate of the fluid, and for communicating data representing at least one value indicative of the noise level of the flow tube.

9. Consumption meter according to any the preceding claims, wherein the consumption meter further comprises sensors for measurements of the pressure and/or the temperature of the fluid.

10. Consumption meter according to any of the preceding claims, wherein the consumption meter is one of: a water meter, a gas meter, a heat meter, and a cooling meter.

11. A method of measuring a flow rate of a fluid supplied in a flow tube by means of a consumption meter according to any of the preceding claims, the method comprising:
- operating the first and second ultrasonic transducers by means of the first control circuit to transmit and receive ultrasonic signals through the fluid in the flow tube,
- generating by means of the first control circuit a signal indicative of flow rate of the fluid,
- operating the sensor for detection of vibro-acoustic signals of the flow tube by means of the second control circuit, and
- generating by means of the second control circuit a signal indicative of noise level of the flow tube.

12. A system comprising a plurality of consumption meters according to any of claims 1-10, wherein the plurality of consumption meters are arranged spatially distributed in a utility network, wherein each of the plurality of consumption meters further comprises communication means arranged to transmit data representing a noise level of the flow tube in response to the signal indicative of noise level of the flow tube, wherein the system comprises a main collector arranged to receive said data representing the noise level of the flow tube from the plurality of consumption meters.

13. System according to claim 12, comprising a data processor arranged to monitor said data representing the noise level from the consumption meters in the utility network, and to determine a measure of a position of a fluid leakage in the utility network in response to said data representing the noise level from the consumption meters and information regarding individual positions of the consumption meters in the utility network.
